# FASCICULE DE BREVET EUROPEEN

(11) **EP 2 615 507 B1**
(45) Date de publication et mention de la délivrance du brevet: **08.03.2017**
(21) Numéro de dépôt: 12151147.1
(22) Date de dépôt: 13.01.2012
(51) Int. Cl.: G04B 39/02, G04B 37/08, G04B 19/28

(54) **Élément d'habillage céramique de pièce d'horlogerie**
Keramisches Ausstattungelement einer Uhr
Keramic external part of a timepiece

(43) Date de publication de la demande: 17.07.2013
(73) Titulaire: Comadur S.A., 2400 Le Locle (CH)
(72) Inventeur: Netuschill, Alexandre, 2400 Le Locle (CH)
(74) Mandataire: Goulette, Ludivine

(56) Documents cités:
- EP-A1- 1 041 460
- CH-A3- 640 995
- IT-B- 1 169 883
- JP-A- 63 200 089
- JP-A- 63 249 085
- US-A1- 2003 043 698

## Description

### Domaine de l'invention

L'invention se rapporte à un organe comportant un élément céramique et, plus précisément, un tel organe destiné à former un élément d'habillage pour une pièce d'horlogerie.

### Arrière plan de l'invention

Les éléments en céramique sont généralement utilisés pour leurs résistances mécanique et chimique. Toutefois, quand ces éléments céramiques doivent être fixés à une autre pièce, il devient difficile de garantir leur fixation.

Le document EP 1 041 460 A1 décrit un organe selon le préambule de la revendication indépendante 1. En particulier il décrit la fixation d'une lunette en céramique sur une carrure de montre, cette fixation étant effectuée à l'aide d'une partie intercalaire déformable.

D'autres exemples de fixation d'un organe céramique sur un autre élément d'une montre sont décrits dans les documents CH 640 995 G, JP 63249085, JP63200089 et IT 1169883.

### Résumé de l'invention

Le but de la présente invention est de pallier tout ou partie les inconvénients cités précédemment en proposant un organe dont l'ajustement de son élément céramique est amélioré.

A cet effet, l'invention se rapporte à un organe pour pièce d'horlogerie tel que défini dans la revendication indépendante 1.

Conformément à d'autres caractéristiques avantageuses de l'invention :
- les évidements forment une première série de rainures rectilignes et parallèles qui se croise avec une deuxième série de rainures rectilignes et parallèles ;
- les première et deuxième séries de rainures sont obliques par rapport à la hauteur dudit élément ;
- les rainures de la première série s'étendent de manière sensiblement perpendiculaire par rapport aux rainures de la deuxième série ;
- les évidements comportent une rugosité moyenne arithmétique comprise entre 0,2 et 3 *µ*m ;
- la partie intercalaire est en polymère ou en métal ;
- le corps est en métal.

De plus, l'invention se rapporte à une pièce d'horlogerie caractérisée en ce qu'au moins un élément d'habillage est formé par au moins un organe conforme à l'une des variantes précédentes.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une représentation en perspective éclatée d'un organe selon l'invention ;
- la figure 2 est une représentation en coupe d'un organe monté selon l'invention ;
- la figure 3 est une photographie montrant un élément céramique selon l'invention.

### Description détaillée des modes de réalisation préférés

L'invention se rapporte à un organe 1 comportant un élément céramique 3 destiné à être ajusté dans le creux 4 d'un corps 5. Préférentiellement, l'organe selon l'invention est destinée à former un élément d'habillage d'une pièce d'horlogerie comme ou partie d'un bracelet, un boîtier ou une lunette. L'organe selon l'invention comporte ainsi un élément en céramique comme des oxydes tels que l'alumine ou de la zircone, ou comme des carbures, des borures ou des nitrures composées de silicium et d'atomes tels que du tungstène, du magnésium, du platine ou du titane.

Bien entendu, même si la présente invention a été développée pour le domaine de l'horlogerie, elle ne saurait s'y limiter. D'autres applications sont également envisageables comme dans la bijouterie, la joaillerie ou les arts de la table.

Dans l'exemple ci-dessus, de manière non limitative, l'organe 1 est une lunette rotative pour une pièce d'horlogerie. Avantageusement selon l'invention, l'organe 1 comporte un dispositif de coopération 7 comprenant une partie intercalaire 2 déformable permettant de bloquer l'ajustement par chassage entre l'élément céramique 3 et le corps 5. Préférentiellement, le corps 5 est formé à partir d'un métal ou d'un alliage métallique. Toutefois, d'autres matériaux peuvent être envisagés.

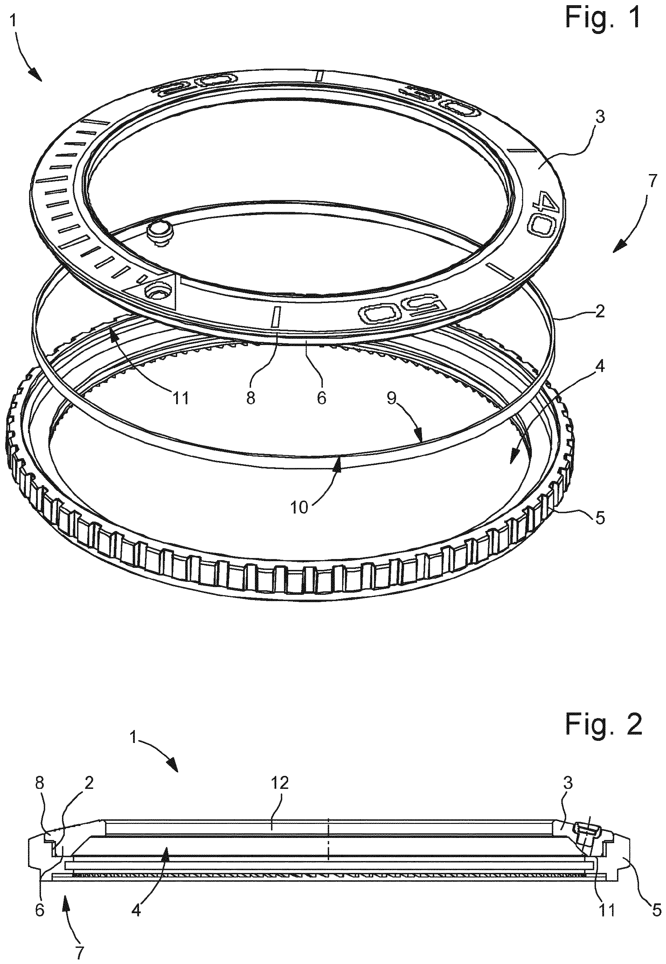

De manière préférée, la partie intercalaire 2 est en polymère ou en métal et sa surface externe 9 est de forme correspondante à la surface externe du talon 6 de l'élément céramique 3. A la figure 1, la partie intercalaire 2 est, de manière non limitative, sensiblement annulaire pour s'adapter à la surface externe du talon 6 qui est sensiblement circulaire.

De manière similaire, la surface externe 10 de la partie intercalaire 2 est de forme correspondante à la surface interne du creux 4 du corps 5. A la figure 1, la partie intercalaire 2 est, de manière non limitative, sensiblement annulaire pour s'adapter à la surface interne du creux 4 du corps 5 qui est sensiblement circulaire.

On comprend donc que l'élément céramique 3 est ajusté sur la portée 11 du corps 5 par déformation de la partie intercalaire 2. On peut voir à la figure 2 que pour améliorer la finition de l'ajustement, l'élément céramique 3 peut comporter une collerette 8 destinée à cacher la portée 11 et la partie intercalaire 2.

Selon l'invention, le dispositif de coopération 7 comporte également des moyens d'accrochage 13 entre la partie intercalaire 2 et l'élément céramique 3 afin de diminuer le déplacement relatif entre ces deux derniers 2, 3. Selon l'invention, les moyens d'accrochage 13 comportent des évidements 14 formés sur l'élément céramique 3 destinés à augmenter localement la rugosité, c'est-à-dire au moins au niveau de la surface externe du talon 6. Les évidements 14 peuvent comporter une rugosité moyenne arithmétique (Rₐ) comprise entre 0,2 et 3 *µ*m et, de manière préférée, entre 0,4 et 0,8 *µ*m. De plus, préférentiellement, les évidements 14 sont structurés de manière destructive comme par exemple au moyen d'un rayonnement laser du type infrarouge.

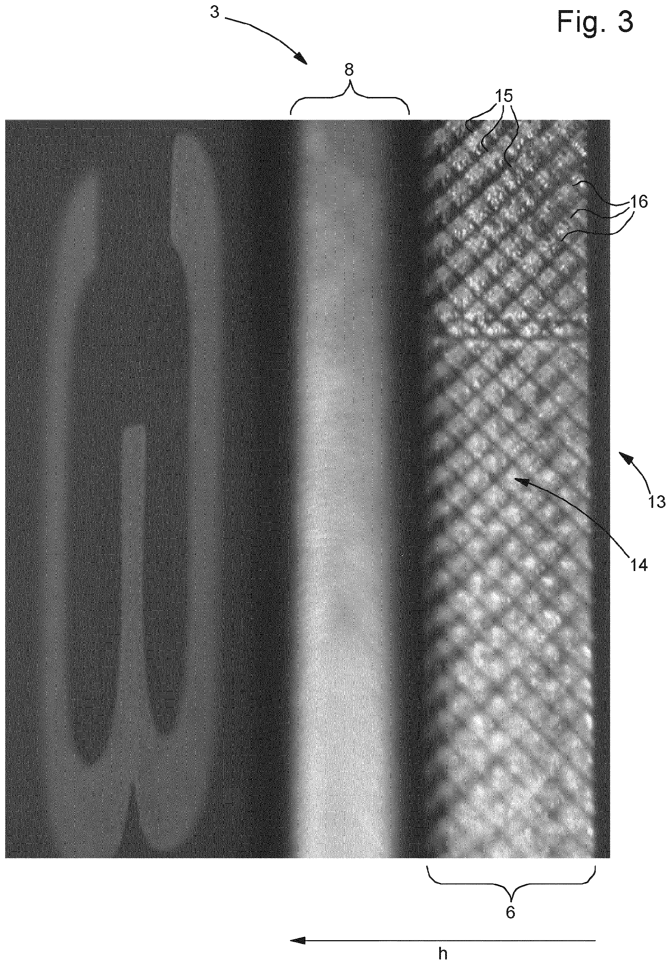

Ainsi, comme visible à l'exemple de la figure 3, les évidements 14 peuvent former une première série 15 de rainures rectilignes et parallèles qui se croise avec une deuxième série 16 de rainures rectilignes et parallèles. On comprend que de tels évidements 14 permettent former une sorte de moletage au niveau de la partie intercalaire 2 lors de l'ajustement de l'élément céramique 3 sur le corps 5 qui empêchera le déplacement relatif entre la partie intercalaire 2 et l'élément céramique 3.

A cet même exemple de la figure 3, on peut également voir que les première et deuxième séries 15, 16 de rainures sont obliques par rapport à la hauteur h dudit élément. Enfin, il est visible que les rainures de la première série 15 s'étendent de manière sensiblement perpendiculaire par rapport aux rainures de la deuxième série 16 en formant un moletage reproduisant un arrangement de carrés et/ou de losanges.

Bien entendu, la présente invention ne se limite pas à l'exemple illustré mais est susceptible de diverses variantes et modifications qui apparaîtront à l'homme de l'art. En particulier, l'élément céramique, le corps ou la partie intercalaire peuvent être de dimensions et/ou de formes différentes afin de les adapter à d'autres pièces et/ou applications sans sortir du cadre de l'invention.

De plus, sans perdre les avantages de l'invention, les première et deuxième séries de rainures peuvent également être chacune oblique et/ou perpendiculaire et/ou parallèle par rapport à la hauteur h dudit élément. De manière similaire, les rainures de la première série 15 peuvent s'étendre de manière sensiblement non perpendiculaire par rapport aux rainures de la deuxième série en formant une distribution différente de la figure 3.

Enfin, il est également parfaitement imaginable que ce soit la surface interne de l'élément céramique qui reçoive successivement la partie intercalaire et le corps.

## Revendications

1. Organe (1) pour une pièce d'horlogerie comportant un élément céramique (3) destiné à être ajusté contre un corps (5), un dispositif de coopération (7) comprenant une partie intercalaire (2) déformable permettant de bloquer l'ajustement entre l'élément céramique (3) et le corps (5), ledit dispositif de coopération (7) comportant également des moyens d'accrochage (13) entre la partie intercalaire (2) et l'élément céramique (3), **caractérise en ce que** lesdits moyens d'accrochage (13) comportent des évidements (14) formés sur l'élément céramique (3) destinés à augmenter localement la rugosité d'au moins une partie de la surface de l'élément céramique (3), afin de diminuer le déplacement relatif entre ladite partie intercalaire (2) et ledit élément céramique (3).

2. Organe (1) selon la revendication précédente, **caractérisé en ce que** les évidements (14) forment une première série (15) de rainures rectilignes et parallèles qui se croise avec une deuxième série (16) de rainures rectilignes et parallèles.

3. Organe (1) selon la revendication précédente, **caractérisé en ce que** les première et deuxième séries (15, 16) de rainures sont obliques par rapport à la hauteur (*h*) dudit élément.

4. Organe (1) selon la revendication 2 ou 3, **caractérisé en ce que** les rainures de la première série (15) s'étendent de manière sensiblement perpendiculaire par rapport aux rainures de la deuxième série (16).

5. Organe (1) selon l'une des revendications précédentes, **caractérisé en ce que** les évidements (14) comportent une rugosité moyenne arithmétique (Rₐ) comprise entre 0,2 et 3 *µ*m.

6. Organe (1) selon l'une des revendications précédentes, **caractérisé en ce que** la partie intercalaire (2) est en polymère ou en métal.

7. Organe (1) selon l'une des revendications précédentes, **caractérisé en ce que** le corps (5) est en métal.

8. Pièce d'horlogerie **caractérisée en ce qu'**au moins un élément d'habillage est formé par au moins un organe (1) conforme à l'une des revendications précédentes.

## Patentansprüche

1. Organ (1) für ein Zeitmessgerät, das ein Keramikelement (3), das dazu bestimmt ist, in einen Körper (5) eingepasst zu werden, und eine Zusammenwirkungsvorrichtung (7), die einen verformbaren eingeschobenen Teil (2) umfasst, der ermöglicht, die Passung zwischen dem Keramikelement (3) und dem Körper (5) zu arretieren, wobei die Zusammenwirkungsvorrichtung (7) außerdem Einhakmittel (13) zwischen dem eingeschobenen Teil (2) und dem Keramikelement (3) umfasst, **dadurch gekennzeichnet, dass** die Einhakmittel (13) Aussparungen (14) aufweisen, die auf dem Keramikelement (3) ausgebildet sind und dazu bestimmt sind, die Rauheit zumindest eines Teils der Oberfläche des Keramikelements (3) lokal zu erhöhen, um die relative Verlagerung zwischen dem eingeschobenen Teil (2) und dem Keramikelement (3) zu verringern.

2. Organ (1) nach dem vorhergehenden Anspruch, **dadurch gekennzeichnet, dass** die Aussparungen (14) eine erste Reihe (15) geradliniger und paralleler Rillen bilden, die sich mit einer zweiten Reihe (16) geradliniger und paralleler Rillen kreuzt.

3. Organ (1) nach dem vorhergehenden Anspruch, **dadurch gekennzeichnet, dass** die erste und die zweite Reihe (15, 16) von Rillen in Bezug auf die Höhe (h) des Elements schiefwinklig angeordnet sind.

4. Organ (1) nach Anspruch 2 oder 3, **dadurch gekennzeichnet, dass** sich die Rillen der ersten Reihe (15) im Wesentlichen senkrecht zu den Rillen der zweiten Reihe (16) erstrecken.

5. Organ (1) nach einem der vorhergehenden Ansprüche, **dadurch gekennzeichnet, dass** die Aussparungen (14) eine mittlere Rauhtiefe (Rₐ) im Bereich von 0,2 bis 3 µm aufweisen.

6. Organ (1) nach einem der vorhergehenden Ansprüche, **dadurch gekennzeichnet, dass** das eingeschobene Teil (2) aus Polymer oder Metall ist.

7. Organ (1) nach einem der vorhergehenden Ansprüche, **dadurch gekennzeichnet, dass** der Körper (5) aus Metall ist.

8. Zeitmessgerät, **dadurch gekennzeichnet, dass** mindestens ein Ausstattungselement durch mindestens ein Organ (1) gemäß einem der vorhergehenden Ansprüche gebildet ist.

## Claims

1. Member (1) for a timepiece comprising a ceramic element (3) intended to be fitted against a body (5), a cooperation device (7) comprising a deformable insert (2) for locking the fit between the ceramic element (3) and the body (5), the cooperation device (7) comprising gripping means (13) between the insert (2) and the ceramic element (3) **characterized in that** the gripping means comprise recesses (14), formed on the ceramic element (3) and intended to increase local roughness of at least a part of the ceramic elements surface, in order to decrease the relative movement between said ceramic element (3) and said insert (2).

2. Member (1) according to the preceding claim, **characterized in that** the recesses (14) form a first series (15) of parallel, rectilinear grooves which intersects with a second series (16) of parallel, rectilinear grooves.

3. Member (1) according to the preceding claim, **characterized in that** the first and second series (15, 16) of grooves are oblique to the height (h) of said element.

4. Member (1) according to claim 2 or 3, **characterized in that** the grooves of the first series (15) extend substantially perpendicularly to the grooves of the second series (16).

5. Member (1) according to any of the preceding claims, **characterized in that** the recesses (14) have an arithmetic mean roughness (Rₐ) comprised between 0.2 and 3 *µ*m.

6. Member (1) according to any of the preceding claims, **characterized in that** the insert (2) is made of polymer or metal.

7. Member (1) according to any of the preceding claims, **characterized in that** the body (5) is made of metal.

8. Timepiece **characterized in that** at least one external element is formed by at least one member (1) according to any of the preceding claims.
